# EUROPEAN PATENT APPLICATION

(11) **EP 2 506 194 A1**
(43) Date of publication of application: **03.10.2012**
(21) Application number: 11002660.6
(22) Date of filing: 31.03.2011
(51) Int. Cl.: G06Q 10/00

(54) **Sysem for enabling the distribution of products via a plurality of distribution channels by managing distribution permission information, method for enabling the distribution of products via a plurality of distribution channels, program, and computer program product**

(71) Applicant: Deutsche Telekom AG, 53113 Bonn (DE)
(72) Inventor: Harrer, Björn, 64293 Darmstadt (DE); Goldberg, Herbert, 64846 Groß Zimmern (DE)
(74) Representative: Schwöbel, Thilo K.

(57) **Abstract**

The invention related to a system for enabling the distribution of products via a plurality of distribution channels by managing distribution permission information,
the system comprising a product usage registry providing a product instance information corresponding to both a first product distribution channel and at least a second product distribution channel,
the first product distribution channel requiring a first product instance format,
the second product distribution channel requiring a second product instance format,
wherein the system is provided such that either
-- the product instance information is generated based on the first product instance format within the first product distribution channel and the second product instance format is generated based on the product instance information, or
-- the product instance information is generated based on the second product instance format within the second product distribution channel and the first product instance format is generated based on the product instance information, or
-- the first product instance format and the second product instance format are generated based on the product instance information.

## Description

### BACKGROUND

The present invention relates to a system for enabling the distribution of products via a plurality of distribution channels by managing distribution permission information. Furthermore, the present invention relates to a method for enabling the distribution of products, to a program, and to a computer program product.

A known approach to distribute products, especially electronically distributed products, to users is to use a distribution channel in the form of a distribution product such as Microsoft TV, which is a division within Microsoft Corporation that develops software platforms for use in set top boxes to access programming over a Cable TV.

Such a distribution channel uses a proprietary product instance format for the distribution of permission information.

Typically, users need to use a specific distribution channel based, e.g., on the choice of a hardware like a set top box or the like.

A user that uses different distribution channels typically does not want to purchase one and the same product, e.g. a video content such as a movie or the like, more than once only to be able to play that video content on different hardware devices such as a two television sets (e.g. in different rooms of a home), or a television set and a mobile telephone or other mobile device such as a tablet computer.

Therefore, the use of different (proprietary) product instance formats limits the usability of the usage of products, especially electronically distributed products such as video contents having a DRM feature (digital rights management) or other electronically distributed products having a DRM feature.

One objective of the present invention is to simplify the distribution of products via a plurality of different distribution channels by managing the distribution permission information such that even by using different proprietary product instance formats, a migration of purchased products is possible between the plurality of distribution channels, i.e. a product purchased using a first product distribution channel can also be used in a second product distribution channel.

### SUMMARY

The object of the present invention is to suggest a system for enabling the distribution of products via a plurality of distribution channels by managing distribution permission information such that it is efficiently possible to switch between the different product distribution channels. Furthermore, the object of the present invention is to provide a method for enabling the distribution of products via a plurality of distribution channels as easily and efficiently as possible.

The object of the present invention is achieved by a system for enabling the distribution of products via a plurality of distribution channels by managing distribution permission information,
the system comprising a product usage registry providing a product instance information corresponding to both a first product distribution channel and at least a second product distribution channel,
the first product distribution channel requiring a first product instance format,
the second product distribution channel requiring a second product instance format, wherein the system is provided such that either
-- the product instance information is generated based on the first product instance format within the first product distribution channel and the second product instance format is generated based on the product instance information, or
-- the product instance information is generated based on the second product instance format within the second product distribution channel and the first product instance format is generated based on the product instance information, or
-- the first product instance format and the second product instance format are generated based on the product instance information.

According to the present invention, it is advantageously possible to use different distribution channels for products, especially electronically distributed products such as video content products like digital movies or the like, in a uniform manner and independent from one of such distribution channels. For example, it is advantageously possible for a (end)user to use more than one distribution channel and to use products, especially purchased content information, that has been obtained in relation with one of the distribution channels also with the other distribution channel. This is useful, e.g., in a situation where such a user has a first hardware device (such as a set top box or a specifically designed television set) related with a first distribution channel and a second hardware device (such as a mobile devices in the form of a PDA (Portable Digital Assistant) or a mobile phone or another set top box) related with a second distribution channel. In such a situation and by means of the system and the method according to the present invention, such a user is able to purchase or otherwise obtain a product such a s a digital content by means of the first distribution channel (and typically using the first hardware device) and use (or play or display or otherwise use) this product (also) with the second hardware device.

Additionally, it is advantageously possible according to the present invention that a product provider or a digital content provider is able to offer to a user the integrated use of different distribution channels such that it is more easily possible for such a user to switch from one distribution channel to another distribution channel. For such a user, this can be beneficial, e.g., because the hardware device associated with one of the possible distribution channels is more attractive than the hardware device associated with another (presently used) hardware device. In such a situation and without the possibility to use a product (that was previously purchased in relation with a first distribution channel) also using a second (new) distribution channel, such a user could be forced to re-purchase products such as digital content information in relation to the second (new) distribution channel. In order to avoid this drawback, the present invention allows for a generation of a product instance in different formats such that it is possible to reuse in second distribution channel products purchased in relation to a first distribution channel and vice versa.

In the context of the present invention, the following terminology regarding the different formats of a product instance are used:
-- the product instance in relation to the first distribution channel has a first product instance format
-- the product instance in relation to the second distribution channel has a second product instance format
-- the product instance in relation to the first distribution channel has a first product instance format , i.e.
-- the generalized product instance information (i.e. independent of one of the distribution channels), i.e. a general data format, is hereinafter called product instance information.

In the context of the present invention, a distribution channel is a group of devices that are able to receive content information and that share a common format related to the content information such as types of usages or the like.

The generalized product instance information is hereinafter also called Content Object Model (COM). According to the present invention, it is preferred that a local content usage service (CUS) is associated to each of the plurality of distribution channels, i.e. a first content usage service is associated to the first distribution channel, and a second content usage service is associated to the second distribution channel.

According to the present invention, it is possible and preferred that the product usage registry comprises a backup copy of the product instance information according to one product instance format (in one distribution channel) or according to all product instance formats (in all the distribution channels) such that in case that one content usage service or a plurality of content usage services fails or fail it can be recovered from the product usage registry.

According to the present invention, it is furthermore preferred that each of the content usage services associated to a specific distribution channel communicates with the product usage registry such that it is possible to:
-- generate the second product instance format based on the product instance information (which is itself generated based on the first product instance format), or
-- generate the first product instance format based on the product instance information (which is itself generated based on the second product instance format), or
-- generated the first and second product instance format based on the product instance information.

According to the present invention, it is possible and preferred that the interface between a specific distribution channel and the associated content usage service is provided either by the specific distribution channel itself, or by means of an adapter service associated to the distribution channel.

Furthermore, it is preferred according to the present invention that each distribution channel implements an own persistence of the instances of the purchased products.

According to the present invention, it is preferred that
-- on request of the first product distribution channel the product instance information in the first product instance format is provided to the first product distribution channel, or wherein
-- on request of the second product distribution channel the product instance information in the second product instance format is provided to the second product distribution channel.

Furthermore, it is preferred according to the present invention that the product instance information is generated on request by the product usage registry after
-- a corresponding first product instance format is generated by the first product distribution channel, or
-- a corresponding second product instance format is generated by the second product distribution channel.

Thereby, it is advantageously possible according to the present invention that the generation of the product instance information in the first or second product instance format does not interact with the process of providing or delivering a purchased (or otherwise provided) product requested by a user within one distribution channel. This means that the process of generating a product instance format according to another distribution channel (than the one actually used in respect of a purchase or delivery activity) is not synchronized (i.e. is asynchronous) with respect to the purchasing or delivery operation.

Still furthermore, it is preferred according to the present invention that the first product instance format and/or the second product instance format are proprietary formats.

Furthermore, it is also preferred according to the present invention that the product is a multimedia content distributed via a telecommunications network.

The present invention also relates to a method for enabling the distribution of products via a plurality of distribution channels by managing distribution permission information,
wherein a product instance information corresponds to both a first product distribution channel and at least a second product distribution channel,
the first product distribution channel requiring a first product instance format,
the second product distribution channel requiring a second product instance format, wherein the method comprises either:
-- in a first step, the first product instance format is generated within the first product distribution channel, and in a second step the product instance information is generated based on the first product instance format, and the second product instance format is generated based on the product instance information, or
-- in a first step, the second product instance format is generated within the second product distribution channel, and in a second step the product instance information is generated based on the second product instance format, and the first product instance format is generated based on the product instance information, or
-- in a first step, the product instance information is generated, and in a second step the first and second product instance format are generated based on the product instance information.

Again, it is advantageously possible according to the method of the present invention that the generation of the product instance information in the first or second product instance format does not interact with the process of providing or delivering a purchased (or otherwise provided) product requested by a user within one distribution channel. This is because the process of providing or delivering a product (in one of the distribution channels) is asynchronous with regard to the generation of the product instance information in the first or second product instance format in another distribution channel.

According to a further embodiment of the method according to the present invention, it is preferred that
-- during the second step and on request of the second product distribution channel the product instance information in the second product instance format is provided to the second product distribution channel, or wherein
-- during the second step and on request of the first product distribution channel the product instance information in the first product instance format is provided to the first product distribution channel.

Also with regard to the inventive method, it is preferred according to the present invention that the first step is performed in connection with a purchase operation regarding the product.

Such a purchase operation may relate to the purchase of the right either:
-- to view a video content during a predefined time interval (of, e.g., 12 hours or 24 hours or 36 hours or 48 hours after the time of the purchase or after a time to be specified at the time of the purchase or at a later time) and/or
-- to view a video content (during an unlimited time interval) a predetermined number of times (e.g., only once, or twice, or three times or ten times) and/or
-- to store or copy or save the video content (during an unlimited time interval) a predetermined number of times (e.g., only once, or twice, or three times or ten times).

According to a further embodiment of the method according to the present invention, it is preferred that the product is a multimedia content distributed via a telecommunications network.

Additionally, the present invention relates to a program comprising a computer readable program code for executing a method according to the present invention or for configuring or controlling a system according to the present invention.

Furthermore, the present invention relates to a computer program product comprising a computer-readable storage medium having computer-readable program instructions embodied in the medium for executing a method according to the present invention or for configuring or controlling a system according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a plurality of distribution channels to be used in connection with a system according to the present invention.

Figure 2 schematically illustrates an embodiment of a system according to the present invention comprising a product usage registry and a plurality of different distribution channels.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

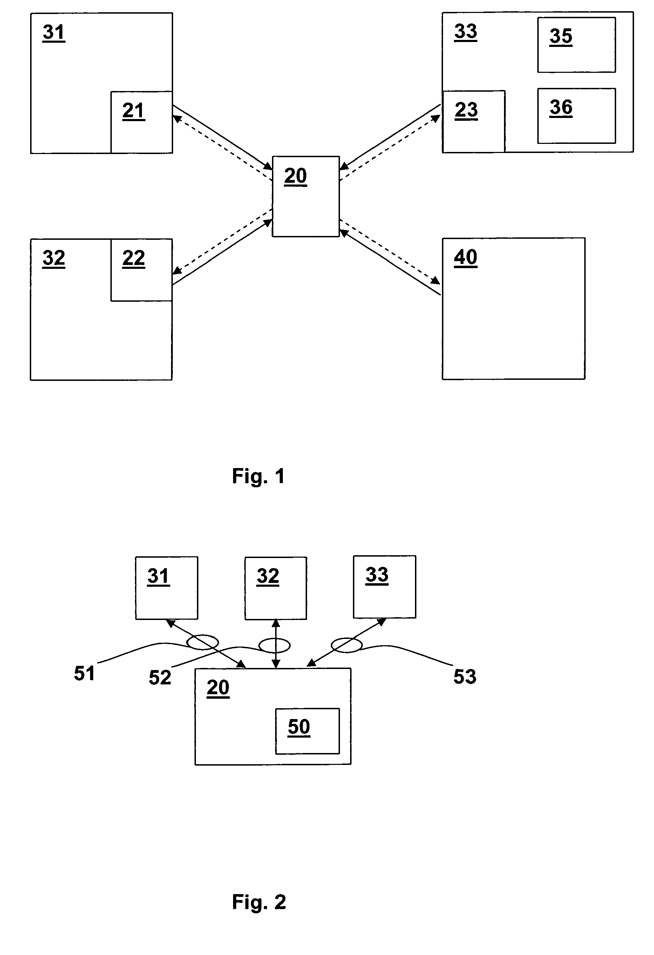

In Figure 1, a representation of a plurality of distribution channels to be used in connection with a system according to the present invention is schematically shown. The inventive system for enabling the distribution of products via a plurality of distribution channels comprises in the example shown a first distribution channel 31, a second distribution channel 32, and a third distribution channel 33. Of course, it is possible that an inventive system only comprises one or two distribution channels or that an inventive system comprises more than three distribution channels. The inventive system furthermore comprises a product usage registry 20. The product usage registry 20 communicates with the distribution channels 31, 32, 33 by means of a so-called content usage service. A content usage service is especially associated to each one of the distribution channels 31, 32, 33, i.e. a first content usage service 21 is associated to the first distribution channel 31, a second content usage service 22 is associated to the second distribution channel 32, and a third content usage service 23 is associated to the third distribution channel 33.

Figure 2 schematically illustrates an embodiment of an inventive system according to the present invention comprising the product usage registry 20 and a plurality of different distribution channels 31, 32, 33. According to the present invention, each distribution channel 31, 32, 33 requires a specific format of a product instance information 50 that is stored within the product usage registry 20. This means that the product instance information 50 in the first product instance format 51 is associated with the first distribution channel 31, the product instance information 50 in the second product instance format 52 is associated with the second distribution channel 32, and the product instance information 50 in the third product instance format 53 is associated with the third distribution channel 33.

As can be seen in Figure 1, a backend service 40 is also coupled to the product usage registry 20.

Reference sign 35 refers to an interface or an adapter entity between the third content usage service 23 and a content distribution network such as a so-called media room. Reference sign 36 refers to an interface or an adapter entity between the third content usage service 23 and a financial transaction system such as an external purchase offer control (EPOC) system.

As an exemplary realization of the inventive system, Figure 1 shows the case where the first distribution channel 31 relates to a web delivery distribution channel, the second distribution channel 32 relates to a mobile delivery distribution channel, and the third distribution channel 33 relates to an IPTV (IP (Internet Protocol) television) delivery distribution channel.

By executing a purchase operation, e.g., in the third distribution channel 33, a product instance information in the third product instance format 53 is generated (in a first step according to the inventive method) in the third distribution channel 33. Depending on the system performance of the third distribution channel 33, the user might be able to use the purchased product, e.g. play a purchased digital video content.

According to the present invention, it is to be understood that any product content data (e.g. video content data) and/or any product meta data that are to be transferred to the user or to an application used by the user are preferably not handled by the product usage registry and associated content usage service but by an additional system dedicated to handle content data and/or meta data, e.g. a content distribution network (CDN) and/or content metadata directory system (CMDS). This means that the inventive system and method (dealing with the digital rights information or data) does neither deal with product content data nor with product metadata and hence can be realized efficiently despite having a comparably high performance.

According to the present invention, the product instance information in the third product instance format 53 is transferred to the product usage registry 20 and a (generalized) product instance information 50 generated (in a second step according to the inventive method). From the (generalized) product instance information 50 in the product usage registry 20, the product instance information in the first and second product instance format 51, 52 is generated in the first and second distribution channel 31, 32.

Of course, in case that the purchase or other delivery operation is executed in the first or second distribution channel 31, 32, a product instance information in the first or second product instance format 51, 52 is generated (in a first step according to the inventive method) in the first or second distribution channel 31, 32. According to the present invention, the product instance information in the first product instance format 53 (or the second product instance format 52) is transferred to the product usage registry 20 and a (generalized) product instance information 50 generated (in a second step according to the inventive method). From the (generalized) product instance information 50 in the product usage registry 20, the product instance information in the second product instance format 52 (first product instance format 51) and third product instance format 53 is generated in the second distribution channel 32 (first distribution channel 31) and the third distribution channel 33.

According to the present invention, it is also possible that initially, only a (generalized) product instance information 50 is present in the product usage registry 20 (according to the first step of the inventive method), and a product instance information in the first, second and third product instance format 51, 52, 53 is generated (in the second step according to the inventive method) in the first, second and third distribution channel 31, 32, 33.

In Figure 1, the drawn through arrows indicate the first step and the transmission of the distribution channel specific product instance formats 51, 52, 53 to the product usage registry 20, whereas the dashed line arrows indicate that product instance information in the first, second or third product instance format 51, 52, 53 are transferred to the distribution channels 31, 32, 33, especially to the associated content usage services 21, 22, 23.

According to the present invention, it is possible and preferred that the distribution, both in the direction from the content usage services 21, 22, 23 to the product usage registry 20 as well as in the direction from the product usage registry 20 to the content usage services 21, 22, 23 (or the distribution channels 31, 32, 33), is dependent on a predetermined settings information such that, e.g. a product instance information in the third product instance format 53 is distributed to the other distribution channels, i.e. in the exemplary embodiment represented in Figure 1, to the first and second distribution channels 31, 32, whereas a product instance information in the first product instance format 51 is not forwarded to the other distribution channels, i.e. the second and third distribution channel 32, 33.

## Claims

1. System for enabling the distribution of products via a plurality of distribution channels by managing distribution permission information,
the system comprising a product usage registry (20) providing a product instance information (50) corresponding to both a first product distribution channel (31) and at least a second product distribution channel (32),
the first product distribution channel (31) requiring a first product instance format (51),
the second product distribution channel (32) requiring a second product instance format (52),
wherein the system is provided such that either
-- the product instance information (50) is generated based on the first product instance format (51) within the first product distribution channel (31) and the second product instance format (52) is generated based on the product instance information (50), or
-- the product instance information (50) is generated based on the second product instance format (52) within the second product distribution channel (32) and the first product instance format (51) is generated based on the product instance information (50), or
-- the first product instance format (51) and the second product instance format (52) are generated based on the product instance information (50).

2. System according to claim 1, wherein
-- on request of the first product distribution channel (31) the product instance information (50) in the first product instance format (51) is provided to the first product distribution channel (31), or wherein
-- on request of the second product distribution channel (32) the product instance information (50) in the second product instance format (52) is provided to the second product distribution channel (32).

3. System according to one of the preceding claims, wherein the product instance information (50) is generated on request by the product usage registry (20) after
-- a corresponding first product instance format (51) is generated by the first product distribution channel (31), or
-- a corresponding second product instance format (52) is generated by the second product distribution channel (32).

4. System according to one of the preceding claims, wherein the first product instance format (51) and/or the second product instance format (52) are proprietary formats.

5. System according to one of the preceding claims, wherein the product is a multimedia content distributed via a telecommunications network.

6. Method for enabling the distribution of products via a plurality of distribution channels by managing distribution permission information,
wherein a product instance information (50) corresponds to both a first product distribution channel (31) and at least a second product distribution channel (32), the first product distribution channel (31) requiring a first product instance format (51),
the second product distribution channel (32) requiring a second product instance format (52),
wherein the method comprises either:
-- in a first step, the first product instance format (51) is generated within the first product distribution channel (31), and in a second step the product instance information (50) is generated based on the first product instance format (51), and the second product instance format (52) is generated based on the product instance information (50), or
-- in a first step, the second product instance format (52) is generated within the second product distribution channel (32), and in a second step the product instance information (50) is generated based on the second product instance format (52), and the first product instance format (51) is generated based on the product instance information (50), or
-- in a first step, the product instance information (50) is generated, and in a second step the first and second product instance format (51, 52) are generated based on the product instance information (50).

7. Method according to claim 6, wherein
-- during the second step and on request of the second product distribution channel (32) the product instance information (50) in the second product instance format (52) is provided to the second product distribution channel (32), or wherein
-- during the second step and on request of the first product distribution channel (31) the product instance information (50) in the first product instance format (51) is provided to the first product distribution channel (31).

8. Method according to claim 6 or 7, wherein the first step is performed in connection with a purchase operation regarding the product.

9. Method according to one of claims 6 to 8, wherein the product is a multimedia content distributed via a telecommunications network.

10. Method according to one of the preceding claims, wherein the first product instance format (51) and/or the second product instance format (52) are proprietary formats.

11. Program comprising a computer readable program code for configuring or controlling a system according to one of claims 1 to 5 or for executing a method according to one of claims 6 to 10.

12. Computer program product comprising a computer-readable storage medium having computer-readable program instructions embodied in the medium for configuring or controlling a system according to one of claims 1 to 5 or for executing a method according to one of claims 6 to 10.
